# EUROPEAN PATENT APPLICATION

(11) **EP 3 115 598 A1**
(43) Date of publication of application: **11.01.2017**
(21) Application number: 14884755.1
(22) Date of filing: 04.03.2014
(51) Int. Cl.: F03D 13/00

(54) **WIND POWER GENERATION DEVICE**

(71) Applicant: The Chugoku Electric Power Co., Inc., Hiroshima-shi, Hiroshima 730-8701 (JP)
(72) Inventor: WADA, Yasutaka, Hiroshima-shi Hiroshima 730-8701 (JP); KUBOTA, Haruhito, Hiroshima-shi Hiroshima 730-8701 (JP); YAMAMURA, Yukimasa, Hiroshima-shi Hiroshima 730-8701 (JP); UCHIYAMA, Ichiro, Hiroshima-shi Hiroshima 730-8701 (JP); OYAMA, Keiji, Hiroshima-shi Hiroshima 730-8701 (JP); YAMASAKI, Toshiki, Hiroshima-shi Hiroshima 730-8701 (JP)
(74) Representative: Osha Liang
(86) International application number: PCT/JP2014/055480
(87) International publication number: WO 2015/132884

(57) **Abstract**

[Problem] To suppress damage to a windmill blade due to a boundary layer separation phenomenon occurring on a blade suction surface of the windmill blade.

[Solution] A wind power generator in which a rotor including lift-type windmill blades receives wind and rotates, to drive a generator to generate electric power, the wind power generator includes: at least one aperture that connects a closed space in the windmill blade and an outside of the windmill blade, provided on a blade suction surface of the windmill blade, the aperture being openable and closable.

## Description

### Technical Field

The present invention relates to wind power generators.

### Background

With a wind power generator including lift-type windmill blades, when speed of air current flowing along a blade suction surface is faster than speed of air current flowing along a blade pressure surface, lift toward the blade suction surface is formed. With this lift the windmill blades rotate to drive a generator, and the wind power energy is converted to obtain electric energy. As the lift increases in proportion to the speed of airflow forming in the periphery of the wind blade surface, for example, there has been proposed a wind power generator provided with vortex generating sections on a blade suction surface of windmill blades, to prevent decrease in speed of airflow due to friction with the blade suction surface (for example, refer to PTL 1).

### Citation List

### Patent Literature

PTL 1: Patent Application Laid-open Publication No. 2009-127448

### Summary

### Technical Problem

Further, the lift that is formed on the blade suction surface of the windmill blade increases as an angle of attack that is an angle formed by a linear direction (a blade chord direction) that connects a leading edge and a trailing edge of the windmill blade and a direction of wind that the wind blade receives becomes greater. When the angle of attack becomes equal to or greater than a predetermined angle, however, a boundary layer separation phenomenon in which airflow separates from a blade suction surface occurs and the lift of the windmill blade decreases. Further, when the boundary layer separation phenomenon occurs in the blade suction surface, a negative pressure region is formed in a downstream side of the separation point, and a difference in pressure is formed between the space in the blades and on the blade suction surface, and a force pulling the blade suction surface to the outer side is applied to the blade suction surface. As a result, the blade suction surface deforms, a fracture is formed in a leading edge of the windmill blade, and the like, and the windmill blade is damaged.

This invention has been made in view of the above matters, and an object is to suppress damage to a windmill blade due to a boundary layer separation phenomenon that occurs on a blade suction surface of the windmill blade.

### Solution to Problem

An aspect of this invention to achieve the above object is a wind power generator in which a rotor including lift-type windmill blades receives wind and rotates, to drive a generator to generate electric power, the wind power generator including: at least one aperture that connects a closed space in the windmill blade and an outside of the windmill blade, provided on a blade suction surface of the windmill blade, the aperture being openable and closable.

With this wind power generator, airflow can be made to flow from the closed space in the windmill blade, toward a negative pressure region on the blade suction surface which has formed with the boundary layer separation phenomenon. Thus, the pressure of the negative pressure region on the blade suction surface increases, and the pressure in the space in the blade decreases, decreasing a pressure difference between the two and decreasing a force that applies to the blade suction surface. Thus, damage to the windmill blade can be suppressed. Further, the boundary layer separation phenomenon may be stopped due to forming of turbulent flows caused by a depression and a projection (for example, an edge of the depression and a lid member) in the aperture, and influence of the boundary layer separation phenomenon can be decreased. Further, when the boundary layer separation phenomenon is not occurring on the blade suction surface the aperture is closed, thus the flow of airflow between the space in the blade and the blade suction surface can be prevented. Further, the turbulent flows caused by the depression and the projection in the aperture can be prevented from occurring. Thus, the airflow can be made to flow along the blade suction surface, and the windmill blades can be rotated efficiently.

The wind power generator, wherein when a boundary layer separation phenomenon or a precursory phenomenon thereof occurs on the blade suction surface, the aperture is opened, and after the boundary layer separation phenomenon has resolved, or after a predetermined time has passed from when the aperture has opened, or after a predetermined time has passed after the boundary layer separation phenomenon has resolved, the aperture is closed.

With this wind power generator, the airflow can be made to flow from the closed space in the windmill blade toward the negative pressure region on the blade suction surface that has formed with the boundary layer separation phenomenon, and damage to the windmill blade can be suppressed. Further, boundary layer separation phenomenon may be stopped due to forming of the turbulent flows caused by the depression and the projection (for example, an edge of the depression and the lid member) in the aperture, and influence of the boundary layer separation phenomenon may be decreased. Further, when the boundary layer separation phenomenon is not occurring on the blade suction surface, by preventing the flow of airflow between the space in the blade and the blade suction surface, and by preventing occurring of turbulent flows caused by the depression and projection in the aperture, the airflow can be made to flow along the blade suction surface. Thus, the windmill blade can be efficiently rotated.

The wind power generator, wherein a partition wall that divides the closed space in the windmill blade into a space on the blade suction surface side and a space on the blade pressure surface side is provided in the closed space.

With this wind power generator, when the aperture opens, the pressure in the space in the blade on the blade pressure surface side decreasing and combining with pressure of wind blowing on the blade pressure surface and applying a force to destroy the blade can be suppressed, and damage to the windmill blade can be suppressed.

The wind power generator, wherein a rotary shaft of the rotor extends in a horizontal direction, and the windmill blades are attached radially such that a longitudinal direction of the windmill blades is along a radial direction of the rotary shaft, and the aperture is provided in a section, of the blade suction surface, on the rotary shaft side in the longitudinal direction.

With this wind power generator, damage to the section to the blade root part side (the rotary shaft side) in which the boundary layer separation phenomenon easily occurs can be certainly suppressed.

The wind power generator, wherein a partition wall that divides the closed space in the windmill blade in the longitudinal direction is provided in the closed space, the partition wall dividing the closed space into a space in which the aperture is provided in the blade suction surface and a space in which the aperture is not provided in the blade suction surface.

With this wind power generator, when the apertures open, the pressure decreasing in the space not provided with apertures (a space to the blade tip end part side) on the blade suction surface and a force applying on the outer circumferential surface of the windmill blade can be suppressed, and damage to the windmill blade can be suppressed.

The wind power generator, wherein the aperture is provided in a section nearer to a trailing edge side than a position where a blade thickness from the blade suction surface to the blade pressure surface is thickest, of the blade suction surface.

With this wind power generator, the apertures can be easily positioned in the position of the negative pressure region formed with the boundary layer separation phenomenon, and the airflow can be made to flow from the space in the blade toward the negative pressure region, certainly and efficiently, and the pressure difference between the space in the blade and above the blade suction surface can be made small.

The wind power generator, wherein the aperture is provided in a section nearer to a leading edge side than a position where the blade thickness is thickest, of the blade suction surface.

With this wind power generator, even when the negative pressure region due to the boundary layer separation phenomenon is formed on the leading edge side of the blade suction surface, damage to the windmill blade can be suppressed. Further, by opening the apertures on the leading edge side and the trailing edge side simultaneously, a large amount of airflow can be made to flow continuously toward the negative pressure region, and the pressure difference between the space in the blade and above the blade suction surface can be made small more certainly.

The wind power generator, wherein a reinforcement member that extends from a suction side member forming the blade suction surface to a pressure side member forming the blade pressure surface is provided in the closed space, and a hole that connects a space on the leading edge side of the windmill blade than the reinforcement member and a space on the trailing edge side of the windmill blade than the reinforcement member is provided in the reinforcement member.

With this wind power generator, even when the negative pressure region due to the boundary layer separation phenomenon is formed on the leading edge side of the blade suction surface, the pressure difference between the space in the blade on the leading edge side and above the blade suction surface can be made small, and damage to the windmill blade can be suppressed. Further, a large amount of airflow can be made to flow from the larger space in the blade toward the negative pressure region, and the pressure difference between the space in the blade and the blade suction surface can be made small more certainly.

Other features of this invention will become clear from the attached drawings and descriptions in this specification.

### Advantageous Effects of Invention

According to this invention, damage to a windmill blade due to a boundary layer separation phenomenon that occurs on a blade suction surface of the windmill blade can be suppressed.

### Brief Description of Drawings

[Fig. 1] Fig. 1 is a schematic perspective view of a wind power generator.
[Fig. 2] Fig. 2 is a plan view of a windmill blade.
[Fig. 3A] Fig. 3A is a diagram describing an airflow around a windmill blade in section along line A-A in Fig. 2.
[Fig. 3B] Fig. 3B is a diagram describing an airflow around a windmill blade in section along line B-B in Fig. 2.
[Fig. 4] Fig. 4 is a sectional view of a windmill blade along line B-B in Fig. 2.
[Fig. 5A] Fig. 5A is a diagram describing an aperture unit provided to a blade suction surface.
[Fig. 5B] Fig. 5B is a diagram describing an aperture unit provided to a blade suction surface.
[Fig. 5C] Fig. 5C is a diagram describing an aperture unit provided to a blade suction surface.
[Fig. 5D] Fig. 5D is a diagram describing an aperture unit provided to a blade suction surface.
[Fig. 6] Fig. 6 is a diagram describing a modified example of a windmill blade.

### Description of Embodiments

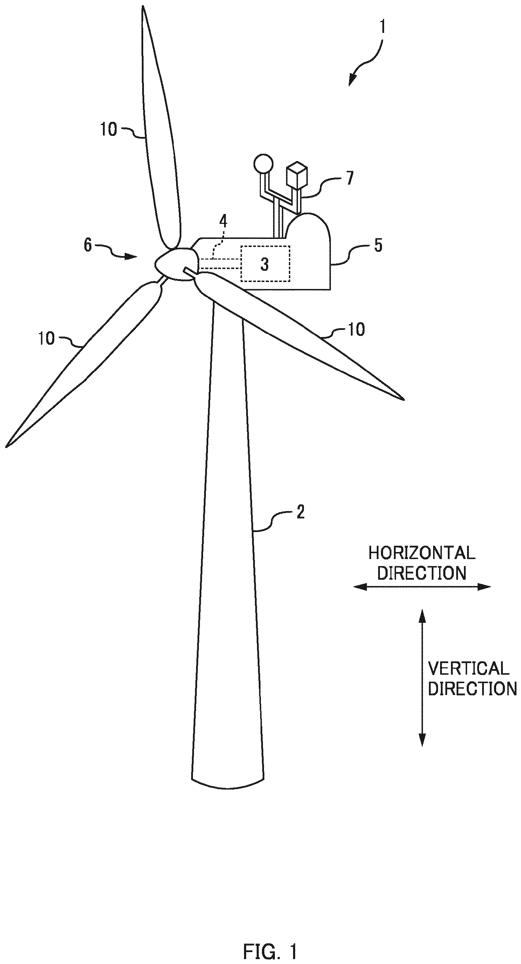

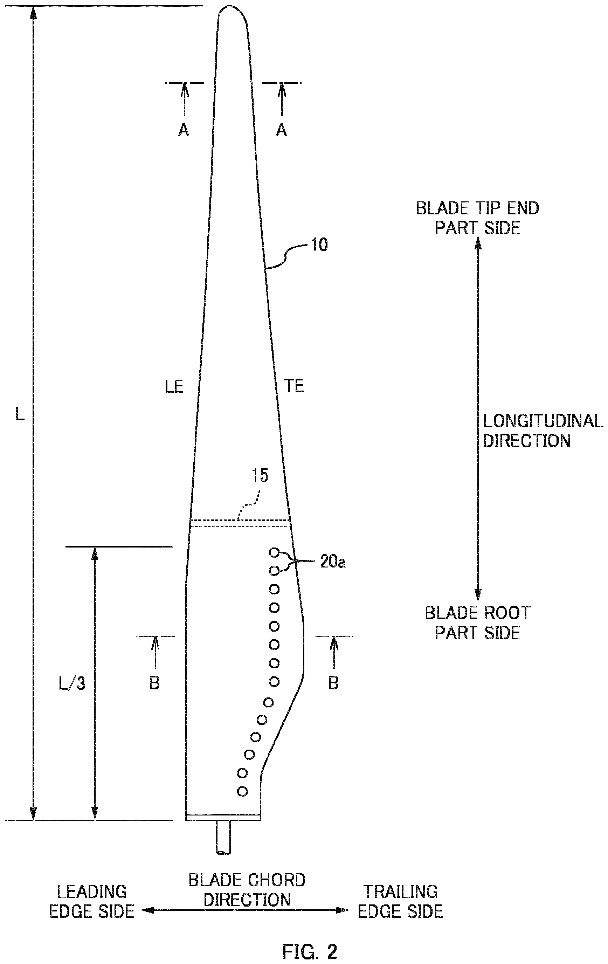

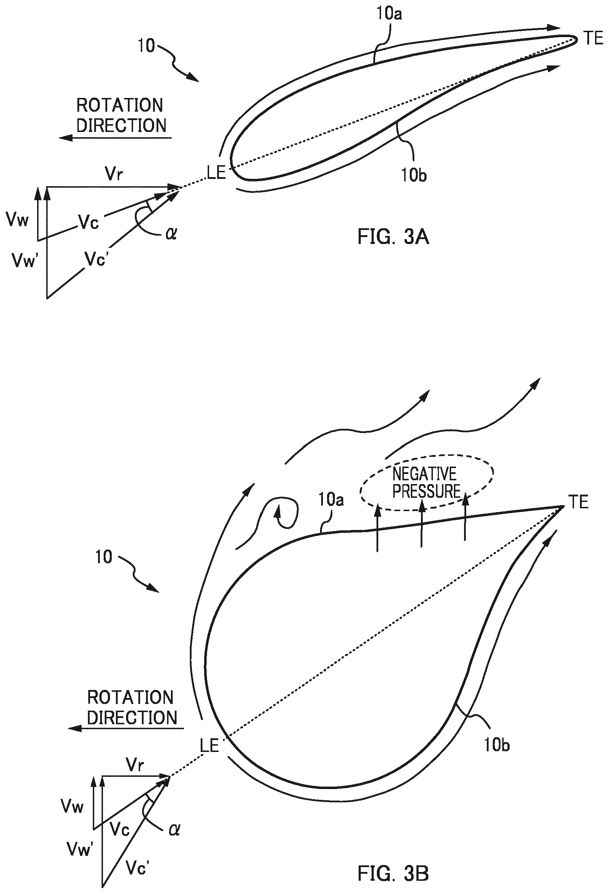

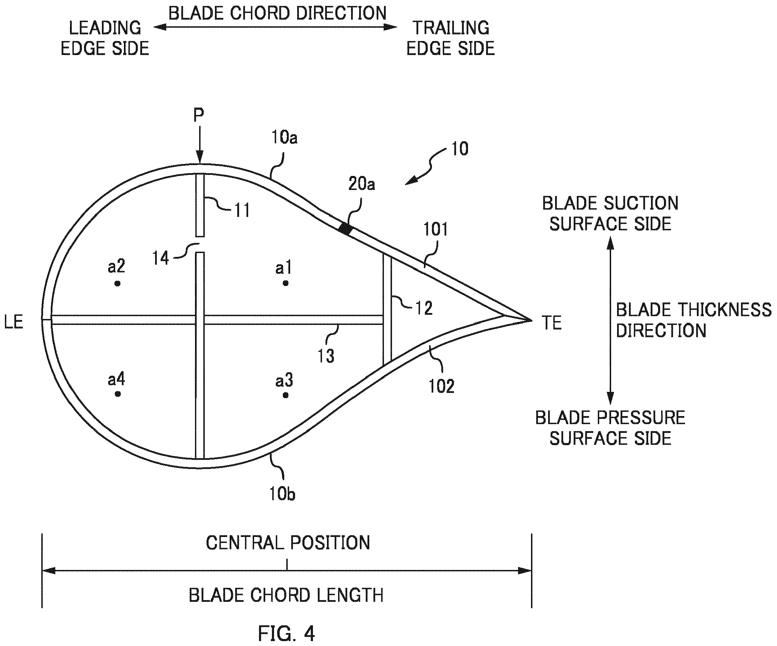

Fig. 1 is a schematic perspective view of a wind power generator 1. Fig. 2 is a plan view of a windmill blade 10. Fig. 3A is a diagram describing an airflow around a section of a windmill blade 10 along line A-A in Fig. 2. Fig. 3B is a diagram describing an airflow around a section of a windmill blade 10 along line B-B in Fig. 2. Fig. 4 is a sectional view of a windmill blade 10 along line B-B in Fig. 2.

### «Wind power generator 1»

The wind power generator 1 includes a tower 2 installed on a base such as the ground, a nacelle 5 installed to a tip part of the tower 2 and housing such as a generator 3 and a rotary shaft 4 of the generator, a rotor 6 that has three lift-type windmill blades 10 and rotates around the rotary shaft 4 elongated in a horizontal direction, and an anemometer 7 attached to the nacelle 5. The windmill blades 10 are attached radially such that the longitudinal direction is along a radial direction of the rotary shaft 4. In other words, the wind power generator 1 of the present embodiment is a generator using a horizontal axis lift-type windmill. It is not limited to the above, however, and, for example the wind power generator 1 may be a generator using a windmill in which a rotary shaft of the windmill blades is along a horizontal direction. Further, the direction in which the rotary shaft 4 extends is not limited to a precise horizontal direction and includes a direction that is slightly misaligned. Further, the number of the windmill blades 10 is not limited to three.

In the below description, a linear direction that connects a leading edge LE and a trailing edge TE of the windmill blade 10 is referred to as a "blade chord direction", a length of a line connecting the leading edge LE and the trailing edge TE is referred to as a "blade chord length", a direction that intersects a plane formed in the longitudinal direction and the blade chord direction of the windmill blades 10 (namely, a direction perpendicular to a paper plane in Fig. 2) is referred to as a "blade thickness direction", a length in the blade thickness direction from a blade suction surface 10a to a blade pressure surface 10b is referred to as a "blade thickness", a section on the rotary shaft 4 side in the longitudinal direction of the windmill blade 10 is referred to as a "blade root part" and the opposite side section is referred to as a "blade tip end part".

The windmill blade 10 is formed such that the blade suction surface 10a and the blade pressure surface 10b form a streamline shape over an entire length in the longitudinal direction. In more detail, as shown in Fig. 4, the blade thickness becomes gradually thicker from the leading edge LE toward the trailing edge TE, and after the blade becomes thickest at a position P, the blade thickness becomes gradually thinner toward the trailing edge TE. It should be noted that, with the windmill blade 10 of this embodiment, a circumferential edge of a suction side member 101 forming the blade suction surface 10a and a circumferential edge of a pressure side member 102 forming the blade pressure surface 10b are joined by such as welding, and a closed space is formed inside the windmill blade 10 with the suction side member 101 and the pressure side member 102. Further, as shown in Fig. 2, in the windmill blade 10, the blade chord length gradually decreases and the blade thickness is made thinner from the blade root part toward the blade tip end part.

When the windmill blade 10 receives wind, and an airflow flows from the leading edge LE to the trailing edge TE of the windmill blade 10, a lift toward an outer side of the blade suction surface 10a is generated due to a speed difference between airflows in the blade suction surface 10a side and the blade pressure surface 10b side. As a result, the windmill blade 10 (the rotor 6) rotates with the rotary shaft 4, and the rotational force of the rotary shaft 4 is transmitted to the generator 3, and the generator 3 is driven to generate electric power.

### <<Boundary layer separation phenomenon in blade suction surface 10a>>

As shown in Fig. 3, the windmill blade 10 receives a combined airflow Vc of an airflow Vw that occurs naturally from wind and an airflow Vr that occurs from rotation of the windmill blade 10. As an angle of attack α that is an angle formed by the direction of the combined airflow Vc and the blade chord direction becomes larger, the lift of the windmill blade 10 increases, and the rotational force of the windmill blade 10 increases. When the angle of attack α is equal to or greater than a predetermined angle, however, airflow does not flow along the blade suction surface 10a, and a boundary layer separation phenomenon in which airflow separates from the blade suction surface 10a occurs, and the lift of the windmill blade 10 decreases.

Thus, in the wind power generator, for example, such as a pitch control that adjusts an attachment angle (pitch angle) of the windmill blades 10 such that the windmill blades 10 are connected rotatably with respect to the rotary shaft 4 and an optimal angle of attack α is made according to wind direction and wind speed, and a yaw control to change the direction of the rotor 6 (the nacelle 35) according to the wind direction such that the rotor 6 can receive wind from the front are performed. But, for example, in a region where the wind direction and wind speed changes greatly, such as in a mountainous region of Japan, pitch control and yaw control cannot cope with this situation, and there is a problem that a boundary layer separation phenomenon in the blade suction surface 10a occurred frequently.

In particular, the blade root part (Fig. 3B) of the windmill blade 10 has a slower rotational speed compared to the blade tip end part (Fig. 3A), and the speed of airflow Vr due to the rotation of the windmill blade 10 is slow. Thus, the blade root part has a greater angle of attack α compared to the blade tip end part, and the pitch control cannot cope with this situation. Additionally, since the ratio of decrease in speed (Vc' → Vc) of the combined airflow is large due to the decrease in speed of natural wind (Vw' → Vw), the wind speed easily decreases, and the boundary layer separation phenomenon easily occurs. Further, since the blade root part with slow rotational speed has a low Reynolds number compared to the blade tip end part, and a laminar boundary layer is formed in the periphery of the blade root part, the boundary layer separation phenomenon easily occurs in the blade root part, and the blade root part has a section with a large curvature compared to the blade tip end part with a thin blade thickness. This also makes the boundary layer separation phenomenon occur easily in the blade suction surface 10a in the blade root part compared to the blade tip end part.

When the boundary layer separation phenomenon occurs in the blade suction surface 10a, other than the lift decreasing, as shown in Fig. 3B, a pressure above the blade suction surface 10a to a downstream side of the boundary layer separation phenomenon decreases, and a negative pressure region is generated. Thus, a pressure difference between the space in the blade and above the blade suction surface occurs, and a force pulling the blade suction surface 10a to the outer side is applied to the blade suction surface 10a (the suction side member 101). Then, an outer shape of the blade suction surface 10a deforms, or a fracture forms in a leading edge LE section of the windmill blade 10 in which the suction side member 101 and the pressure side member 102 are joined as in this embodiment, and there is a possibility that the windmill blade 10 is damaged. With the wind power generator 1 of this embodiment, the object is to suppress damage to the windmill blade 10 due to the boundary layer separation phenomenon occurring in the blade suction surface 10a, in particular, to suppress damage to the windmill blade 10 due to a boundary layer separation phenomenon that easily occurs in the blade root part.

### «Apertures 20a of Windmill blade 10»

To suppress damage of the windmill blade 10 due to the boundary layer separation phenomenon, in the wind power generator 1 of this embodiment, openable and closable apertures 20a (an aperture unit 20 to be described later) that connect the closed space in the windmill blade 10 and the outside are provided. When the boundary layer separation phenomenon in the blade suction surface 10a of the windmill blade 10 or the precursory phenomenon thereof occurs, the apertures 20a are opened, and after the boundary layer separation phenomenon has resolved, or after a predetermined time has passed from when the apertures have opened, or after a predetermined time has passed after the boundary layer separation phenomenon has resolved, the apertures 20a are closed.

By doing so, airflow can be made to flow from the closed space in the windmill blade 10 via the apertures 20a, toward the negative pressure region of the blade suction surface 10a generated due to the boundary layer separation phenomenon. Thus, pressure in the negative region of the blade suction surface 10a can be increased, and pressure of the space in the blade can be decreased. In other words, since the pressure difference between the space in the blade and above the blade suction surface 10a can be made small, and a force pulling the blade suction surface 10a to the outer side can be decreased, damage to the windmill blade 10 can be suppressed. Further, turbulent flow caused by depressions and projections (for example, edges of the depressions or lid members) in the apertures 20a can stop the boundary layer separation phenomenon or decrease influence of the boundary layer separation phenomenon. On the other hand, when the boundary layer separation phenomenon is not occurring in the blade suction surface 10a, the apertures 20 are closed, and thus the flow of airflow between the space in the blade and the blade suction surface 10a can be prevented, and forming of the turbulent flow caused by the depressions and projections in the apertures 20a can be prevented. Thus, airflow can be made to flow along the blade suction surface 10a, and the windmill blade 10 can be rotated efficiently.

Further, as described above, the boundary layer separation phenomenon in the blade suction surface 10a easily occurs in the blade root part of the windmill blade 10 than in the blade tip end part. For this reason, with the windmill blade 10 of this embodiment, as shown in Fig. 2, the apertures 20a are provided in a section on the blade root part side (a section to the rotary shaft 4 side in the longitudinal direction) of the blade suction surface 10a. Specifically, a plurality of the apertures 20a are aligned with an interval in the longitudinal direction, over a range of 1/3 of a length (L/3) of an entire length (L) of the windmill blade 10 from an end on the blade root part side of the windmill blade 10 toward the blade tip end part side. On the other hand, apertures 20a are not provided in a section of the blade suction surface 10a on the blade tip end part side. This is because the boundary layer separation phenomenon does not easily occur in the blade tip end part as compared in the blade root part and there is little possibility of damage to the windmill blade 10 due to the boundary layer separation phenomenon even without providing apertures 20a, and there is no problem in this. In other words, by providing the apertures 20a in only the section to the blade root part side of the blade suction surface 10a, in which the boundary layer separation phenomenon easily occurs, the number of the apertures 20a can be kept small, thereby increasing manufacturing cost of the windmill blade 20 and suppressing decrease in strength of the windmill blade while certainly suppressing damage to the windmill blade 10 due to the boundary layer separation phenomenon. It should be noted that, in Fig. 2, the plane shape of the aperture 20a is circular, but it is not limited to the above, and the plane shape may be such as a quadrangle, for example.

Further, a region to the downstream side of the separation point of the blade suction surface 10a becomes a negative pressure region. In the case where a curvature of the section of the blade root part is large as in the windmill blade 10 shown in Fig. 4, since the inclination directions of the blade suction surface 10a greatly differ on both sides of the thickest blade position P, the boundary layer separation phenomenon easily occurs near the thickest blade position P. For this reason, with the windmill blade 10 of this embodiment, the apertures 20a are provided in a section on the trailing edge side than the thickest blade position P of the blade suction surface 10a. Furthermore, the apertures 20a are provided in a section on the trailing edge side than the central position of the blade chord length of the blade suction surface 10a. By doing so, the apertures 20a are easily positioned in a position to a negative pressure region that is formed due to the boundary layer separation phenomenon. Thus, the airflow can be certainly made to flow from the space in the blade toward the negative pressure region and efficiently, and the pressure difference between the space in the blade and above the blade suction surface 10a can be made small.

Further, as shown in Fig. 4, in the windmill blade 10, a first reinforcement member 11 is provided at the thickest blade position P, and a second reinforcement member 12 is provided at a position on the trailing edge side than the apertures 20a. Each of the first reinforcement member 11 and the second reinforcement member 12 is extended from an inner side surface of the suction side member 101 to an inner side surface of the pressure side member 102 in the blade thickness direction. A first partition wall 13 that extends in the blade chord direction from the second reinforcement member 12 to an inner side surface corresponding to the leading edge LE is provided in the windmill blade 10. Further, a hole 14 is provided in the first reinforcement member 11 in a section near to the blade suction surface side than the first partition wall 13, the hole connecting a space a2 in the blade on the leading edge side than the first reinforcement member 11 and a space a1 in the blade on the trailing edge side.

With the first partition wall 13, the closed space in the windmill blade 10 is divided into spaces a1, a2 in the blade on the blade suction surface side and spaces a3, a4 in the blade on the blade pressure surface side, and the flow of air between the spaces a1, a2 in the blade on the blade suction surface side and the spaces a3, a4 in the blade on the blade pressure surface side is restricted. In other words, with the first partition wall 13, the closed surface in the windmill blade 10 is divided to the spaces a1, a2 in the blade that are connected to the outside above the blade suction surface 10a via the apertures 20a, and the spaces a3, a4 in the blade that are not connected to the outside above the blade suction surface 10a. Supposing that the first partition wall 13 is not provided in the windmill blade 10, the pressure of the spaces a3, a4 in the blade on the blade pressure surface side will decrease when the apertures 20a open. But a negative pressure region is not formed in the blade pressure surface 10b as in the blade suction surface 10a. Thus, a difference in pressure is formedbetween the spaces a3, a4 in the blade to the blade pressure surface side and outside on the blade pressure surface side 10b, and a force to press the blade pressure surface side 10b to the inner side acts on the blade pressure surface 10b (the pressure side member 102), and the blade pressure surface 10b is deformed with such as a depression. Thus, by providing the first partition wall 13 in the windmill blade 10, even when the apertures 20a open, the pressure in the spaces a3, a4 in the blade to the blade pressure surface side can be prevented from decreasing to lower than the outside pressure and a force applying to the blade pressure surface 10b can be prevented, thus being able to suppress damage to the windmill blade 10.

Similarly, as shown in Fig. 2, a second partition wall 15 is provided in the windmill blade 10. The second partition wall 15 divides the closed space in the windmill blade 10 in the longitudinal direction to a space in which the apertures 20a are not provided to the blade suction surface 10a (a space to the blade tip end part side) and a space provided with the apertures 20a in the blade suction surface 10a (a space to the blade root part side). In other words, by providing the second partition wall 15 in the windmill blade 10, the flow of air between the space on the blade tip end part side and the space on the blade root part side is restricted, and even when the apertures 20a are opened, the pressure of the space to the blade tip end part side can be prevented from decreasing to lower than the outside pressure. Thus, a force can be prevented from applying to the outer peripheral surface of the blade tip end part, and damage to the windmill blade 10 can be suppressed.

The first partition wall 13 and the second partition wall 15 are preferably formed with a flexible member. In this case, when the apertures 20a open and the pressure in the space connected with the apertures 20a decreases, the first partition wall 13 and the second partition wall 15 bend to prevent a strong force from being applied to a connection part between the inner side surface of the windmill blade 10 and the partition walls 13, 15.

Further, as described above, the first reinforcement member 11 is provided with a hole 14 that connects the space a2 in the blade on the leading edge side of the windmill blade 10 than the first reinforcement member 11 and the space a1 in the blade on the trailing edge side, near to the blade suction surface side than the first partition wall 13. By doing so, when the apertures 20a open, the pressure in the space a1 in the blade to the trailing edge side as well as the space a2 on the leading edge side can be decreased. Thus, when a negative pressure region due to a boundary layer separation phenomenon is generated on the leading edge side of the blade suction surface 10a, the difference in pressure between the space a2 in the blade on the leading edge side and above the blade suction surface 10a can be made small, and damage to the windmill blade 10 can be suppressed. Further, by providing the hole 14 to the first reinforcement member 11, a large amount of airflow can be made to flow from the larger spaces a1, a2 in the blade toward the negative pressure region, and the difference in pressure can certainly be made smaller between the spaces a1, a2 in the blade and above the blade suction surface 10a.

### «Aperture unit 20»

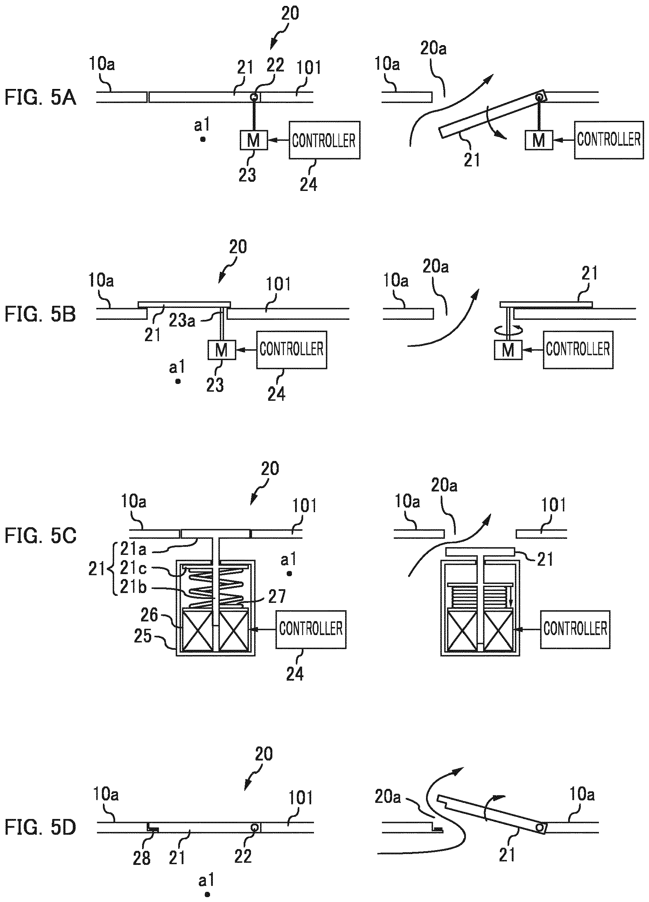

Fig. 5A to Fig. 5D are diagrams describing an embodiment of an aperture unit 20 provided to the blade suction surface 10a, namely, an opening and closing mechanism of the apertures 20a. It should be noted that, the actual blade suction surface 10a is a curved surface, but in Fig. 5 the blade suction surface 10a is shown as a plane to simplify the description. Further, the aperture unit 20 shown in Fig. 5 is merely one example, and the mechanism can be any mechanism as long as the mechanism can open and close the apertures 20a.

For example, the aperture unit 20 shown in Fig. 5A includes a lid member 21 that is a part of the suction side member 101, a hinge 22 that connects one end of the lid member 21 and the suction side member 101, a motor 23 that rotationally moves the lid member 21 via the hinge 22, and a controller 24 that controls the motor 23. In this case, when the controller 24 detects the boundary layer separation phenomenon or the precursory phenomenon thereof in the blade suction surface 10a, the motor 23 is driven to rotationally move the hinge 22. In this way, with the hinge 22 as a fulcrum, the lid member 21 is rotationally moved to the space a1 side in the blade to open the aperture 20a, and the space a1 in the blade and the outside above the blade suction surface 10a are connected. Further, the controller 24, after detecting that the boundary layer separation phenomenon has been resolved, or after a predetermined time has passed since the aperture 20a has been opened, or after a predetermined time has passed after detecting that the boundary layer separation phenomenon has been resolved, drives the motor 23 again to rotationally move the lid member 21 to close the aperture 20a, and shields connection between the space a1 in the blade and the outside above the blade suction surface 10a.

As shown in Fig. 5B, there may be an aperture unit 20 including a lid member 21 that is a part of a suction side member 101, a motor 23 with a rotary shaft 23a connected to the lid member 21, and a controller 24 that controls the motor 23. In this case, the controller 24 drives the motor 23, to rotationally move the lid member 21 around the rotary shaft 23a of the motor 23, and the aperture 20a can be opened and closed.

Further, for example, as shown in Fig. 5C, there may be an aperture unit 20 including a lid member 21 that is a part of a suction side member 101, a controller 24, a housing 25 provided to a space a1 in the blade, an electromagnetic solenoid 26 provided in the housing 25, and a spring 27. It should be noted that, the lid member 21 includes a lid part 21a covering an aperture 20a, an operating shaft 21b that extends from a rear surface of the lid part 21a, and a locking part 21c that protrudes from the operating shaft 21b. The spring 27 is passed through the operating shaft 21b that is below the locking part 21c. In this case, when the controller 24 excites a coil of the electromagnetic solenoid 26, the lid member 21 is attracted to the side of the space a1 in the blade against a restoring force of the spring 27, to open the aperture 20a between the lid part 21a and the suction side member 101. When the controller 24 demagnetizes the coil of the electromagnetic solenoid 26, the lid member 21 is moved to the outer side with the restoring force of the spring 27, and the aperture 20a is closed with the lid part 21a. It should be noted that, when a ceiling part of the housing 25 and the locking part 21c come into contact, the movement of the lid member 21 is restricted, and the lid part 21a and the suction side member 101 are maintained in a flat state.

Further, an aperture unit 20 shown in Fig. 5D includes a lid member 21 that is a part of a suction side member 101, a hinge 22 that connects an end of the lid member 21 and the suction side member 101, and a magnet 28 provided in a position that comes in contact with another end (a rear surface) of the lid member 21. The aperture 20a is opened and closed using a pressure difference between the space a1 in the blade and above the blade suction surface 10a. In this case, when a boundary layer separation phenomenon occurs on the blade suction surface 10a, the lid member 21 is pulled with the negative pressure region, and the aperture 20a is opened. Then, when the boundary layer separation phenomenon on the blade suction surface 10a is resolved, the lid member 21 is rotationally moved to the side of the space a1 in the blade due to the lid member 21's own weight or the attracting force of the magnet 28, and the aperture 20a is closed.

### «Detection method of boundary layer separation phenomenon»

As with the aperture unit 20 shown in Fig. 5A to Fig. 5C described above, when the controller 24 is controlling opening and closing of the aperture 20a, the controller 24 needs to detect the boundary layer separation phenomenon. As described above, when the angle of attack α becomes too great, the boundary layer separation phenomenon occurs. Thus, for example, by calculating the angle of attack α based on the value measured by the anemometer 7, the boundary layer separation phenomenon can be detected. Specifically, the controller 24 can perform control to determine that the boundary layer separation phenomenon is occurring when the calculated angle of attack α is equal to or greater than a threshold value and make the aperture part 20a open, and the controller 24 can determine that the boundary layer separation phenomenon has resolved when the calculated angle of attack α is smaller than a threshold value and close the aperture part 20a. Further, to more accurately detect the boundary layer separation phenomenon, in the case of the wind power generator 1 performing pitch control or yaw control, the angle of attack α may be calculated in consideration of the attaching angle of the windmills blade 10 and the orientation of the rotor 6, in addition to the wind direction and the wind speed.

Further, when the boundary layer separation phenomenon occurs, the pressure on the blade suction surface 10a decreases. Thus, a pressure sensor (not shown) that measures pressure above the blade suction surface 10a may be provided on the blade suction surface 10a, in order to detect occurrence and resolving of the boundary layer separation phenomenon based on the measurement value of the pressure sensor. Further, when the boundary layer separation phenomenon occurs, separation and re-contacting of airflow to the blade suction surface 10a are repeated, and vibration on the blade suction surface 10a occurs. Thus, a vibration sensor (not shown) that measures vibration on the blade suction surface 10a may be provided to the blade suction surface 10a, and the occurring and resolving of the boundary layer separation phenomenon may be detected based on measurement values of the vibration sensor.

Further, there are cases in which measurement values of such as wind direction and wind speed, pressure, and vibration change in a short period of time, and there is a possibility that the opening and closing of the apertures 20a are repeated in a short period of time. For this reason, from when occurring of a boundary layer separation phenomenon has been detected with the controller 24 based on such as calculation results of an angle of attack α and the apertures 20a are opened, the apertures 20a may be closed after a predetermined time has passed. In other words, the controller 24 may close the aperture 20a without detecting resolving of the boundary layer separation phenomenon. In this case, control with the controller 24 also becomes easy. It should be noted that, the predetermined time from when the apertures 20a are opened to when the apertures 20a are closed is equal to or greater than a time needed from when the apertures 20a are opened to when there is no pressure difference between a space in the blade and above the blade suction surface 10a or when the pressure difference becomes small, and the time is to be decided based on such as calculation or experience. Further, the aperture 20a may be closed after a predetermined time has passed from when the boundary layer separation phenomenon has resolved. In this case, the aperture 20a can be closed after the boundary layer separation phenomenon has certainly been resolved, and further the apertures 20a are closed after detecting the resolving of the boundary layer separation phenomenon, thus damage to the windmill blade 10 can be certainly suppressed.

Further, the boundary layer separation phenomenon does not have to be detected based on any one of the parameters of the angle of attack α, the pressure above the blade suction surface 10a, and vibration. The boundary layer separation phenomenon may be detected based on a plurality of the parameters. Further, the aperture 20a may be opened at a timing in which a precursory phenomenon of the boundary layer separation phenomenon has been detected based on such as the angle of attack α, the pressure above the blade suction surface 10a, and vibration.

Further, in the section where the apertures 20a have been provided which is a section on the blade root part side of the blade suction surface 10a, a plurality of pressure sensors and vibration sensors to detect the boundary layer separation phenomenon can be arranged with an interval in between in the longitudinal direction. Then, the position in which the negative pressure region is formed due to the boundary layer separation phenomenon in the longitudinal direction may be specified, and only the aperture 20a in the region in which the negative pressure region is occurring may be opened. In this way, airflow can be made to flow along the blade suction surface 10a in the section of the blade suction surface 10a where the boundary layer separation phenomenon has not occurred.

### «Modified Example»

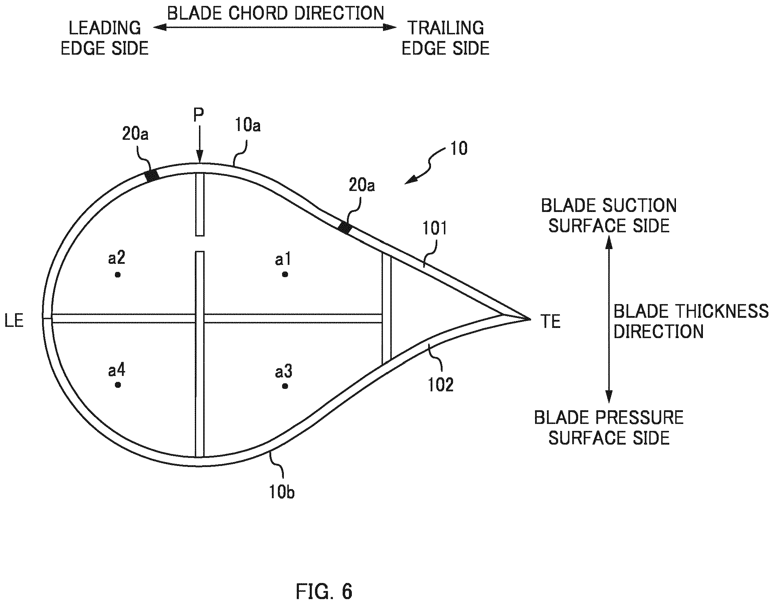

Fig. 6 is a diagram describing a modified example of the windmill blade 10, and is a section view of the blade root part. In the above described windmill blade 10 (Fig. 4), the apertures 20a are provided in only the section on the trailing edge side than the thickest blade position P of the blade suction surface 10a, but it is not limited to the above, and the apertures 20a may be provided in the section to the leading edge side than the blade thickest position P of the blade suction surface 10a, as in the windmill blade 10 in Fig. 6. In this case, even when the negative pressure region due to the boundary layer separation phenomenon occurs on the leading edge side of the blade suction surface 10a, by opening the apertures 20a on the leading edge side, the pressure difference between the space a2 in the blade on the leading edge side and above the blade suction surface 10a can be made small. As a result, damage to the windmill blade 10 can be suppressed. Further, when the negative pressure region is formed on the trailing edge side of the blade suction surface 10a, by opening the apertures 20a on the leading edge side and on the trailing edge side simultaneously, a large amount of airflow can be made to flow continuously toward the negative pressure region, and the pressure difference between the spaces a1, a2 in the blade and above the blade suction surface 10a can be made certainly small.

Further, in the above described windmill blade 10, the apertures 20a are provided in only the section on the blade root part side of the blade suction surface 10a, but it is not limited to the above, and a windmill blade may be provided with the apertures 20a over an entire region of the blade suction surface 10a in the longitudinal direction, for example. Further, with the above-described windmill blade 10, the first partition wall 13 and the second partition wall 15 are provided in the space in the blade and the hole 14 is provided in the first reinforcement member 11, but the windmill does not have to be provided with the above. Further, the windmill may have one aperture 20a. Further, the windmill may have a plurality (for example, three or more) of apertures 20a aligned with an interval in between along a direction from the leading edge LE to the trailing edge TE of the blade suction surface 10a.

The above embodiment is to facilitate understanding of this invention and does not limit the invention in any way. This invention may be changed and modified without departing from the gist thereof, and equivalents of this invention are included.

### Reference Signs List

- 1: wind power generator,
- 2: tower,
- 3: generator,
- 4: rotary shaft,
- 5: nacelle,
- 6: rotor,
- 7: anemometer,
- 10: windmill blade,
- 10a: blade suction surface,
- 10b: blade pressure surface,
- 101: suction side member,
- 102: pressure side member,
- 11: first reinforcement member,
- 12: second reinforcement member,
- 13: first partition wall,
- 14: hole,
- 15: second partition wall,
- 20: aperture unit,
- 20a: aperture,
- 21: lid member,
- 22: hinge,
- 23: motor,
- 24: controller,
- 25: housing,
- 26: electromagnetic solenoid,
- 27: spring,
- 28: magnet

## Claims

1. A wind power generator in which a rotor including lift-type windmill blades receives wind and rotates, to drive a generator to generate electric power, the wind power generator comprising:
at least one aperture that connects a closed space in the windmill blade and an outside of the windmill blade, provided on a blade suction surface of the windmill blade, the aperture being openable and closable.

2. The wind power generator according to claim 1, wherein
when a boundary layer separation phenomenon or a precursory phenomenon thereof occurs on the blade suction surface, the aperture is opened, and
after the boundary layer separation phenomenon has resolved, or after a predetermined time has passed from when the aperture has opened, or after a predetermined time has passed after the boundary layer separation phenomenon has resolved, the aperture is closed.

3. The wind power generator according to claim 1 or 2, wherein
a partition wall that divides the closed space in the windmill blade into a space on the blade suction surface side and a space on the blade pressure surface side is provided in the closed space.

4. The wind power generator according to any one of claims 1 to 3, wherein
a rotary shaft of the rotor extends in a horizontal direction, and the windmill blades are attached radially such that a longitudinal direction of the windmill blades is along a radial direction of the rotary shaft, and
the aperture is provided in a section, of the blade suction surface, on the rotary shaft side in the longitudinal direction.

5. The wind power generator according to claim 4, wherein
a partition wall that divides the closed space in the windmill blade in the longitudinal direction is provided in the closed space, the partition wall dividing the closed space into a space in which the aperture is provided in the blade suction surface and a space in which the aperture is not provided in the blade suction surface.

6. The wind power generator according to any one of claims 1 to 5, wherein
the aperture is provided in a section nearer to a trailing edge side than a position where a blade thickness from the blade suction surface to the blade pressure surface is thickest, of the blade suction surface.

7. The wind power generator according to claim 6, wherein
the aperture is provided in a section nearer to a leading edge side than a position where the blade thickness is thickest, of the blade suction surface.

8. The wind power generator according to any one of claims 1 to 7, wherein
a reinforcement member that extends from a suction side member forming the blade suction surface to a pressure side member forming the blade pressure surface is provided in the closed space, and
a hole that connects a space on the leading edge side of the windmill blade than the reinforcement member and a space on the trailing edge side of the windmill blade than the reinforcement member is provided in the reinforcement member.
